(19) **Europäisches Patentamt / European Patent Office / Office européen des brevets**

(11) **EP 4 009 070 B1**

(12) **FASCICULE DE BREVET EUROPEEN**

(45) Date de publication et mention de la délivrance du brevet:
**23.10.2024   Bulletin 2024/43**

(21) Numéro de dépôt: **21206292.1**

(22) Date de dépôt: **03.11.2021**

(51) Classification Internationale des Brevets (IPC):
**G01S 7/10** *(2006.01)*   **G01C 19/32** *(2006.01)*
**G01S 17/933** *(2020.01)*   **G08G 5/00** *(2006.01)*
**G01S 7/06** *(2006.01)*   **G08G 5/04** *(2006.01)*
**G01S 7/12** *(2006.01)*   **G01S 7/51** *(2006.01)*
**G01S 13/933** *(2020.01)*

(52) Classification Coopérative des Brevets (CPC):
**G01S 17/933; G01S 7/062; G01S 7/12; G01S 7/51; G01S 13/933; G08G 5/0021; G08G 5/0052; G08G 5/045**

(54) **PROCÉDÉ ET SYSTÈME DE DÉTECTION D'OBSTACLES AVEC UN SENSEUR D'OBSTACLES POUR UN AÉRONEF**

VERFAHREN UND SYSTEM ZUR HINDERNISERKENNUNG MITHILFE EINES HINDERNISSENSORS FÜR LUFTFAHRZEUG

METHOD AND SYSTEM FOR DETECTING OBSTACLES WITH AN OBSTACLE SENSOR FOR AN AIRCRAFT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **02.12.2020   FR 2012540**

(43) Date de publication de la demande:
**08.06.2022   Bulletin 2022/23**

(73) Titulaire: **Airbus Helicopters**
**13725 Marignane Cedex (FR)**

(72) Inventeur: **DAMIANI, Nicolas**
**13008 MARSEILLE (FR)**

(74) Mandataire: **GPI Brevets**
**1330, rue Guillibert de la Lauzière**
**EuroParc de Pichaury**
**Bât B2**
**13856 Aix en Provence Cedex 3 (FR)**

(56) Documents cités:
**EP-A1- 2 138 864**   **EP-A2- 3 236 213**
**US-A1- 2013 282 208**   **US-A1- 2013 332 062**

EP 4 009 070 B1

Processed by Luminess, 75001 PARIS (FR)

**Description**

La présente invention concerne un procédé et un système de détection d'obstacles avec un senseur d'obstacles pour un aéronef.

Un aéronef peut comprendre un système de détection d'obstacles. Un tel système de détection d'obstacles peut inclure un senseur d'obstacles et un afficheur mettant en évidence les obstacles détectés. Par exemple, le senseur d'obstacles peut comprendre un capteur d'obstacles du type connu sous l'acronyme LIDAR et l'expression anglaise « LIght Détection And Ranging ».

Un capteur d'obstacles LIDAR peut balayer l'espace environnant en élévation dans un champ angulaire et en azimut. Chaque point détecté d'un obstacle peut être repéré par sa position par rapport au capteur d'obstacles. Un tel point peut être dénommé « point d'obstacle » par commodité. Ainsi, chaque point d'obstacle peut être repéré par la distance le séparant du capteur d'obstacles ainsi que par un angle de gisement et un angle de site par rapport au senseur d'obstacles. Un système de détection d'obstacles peut comprendre un dispositif de localisation par satellites et une mémoire pour repérer les points d'obstacles dans un référentiel local de l'aéronef.

Des capteurs d'obstacles LIDAR d'ancienne génération permettent de balayer l'espace environnant seulement sur 120 degrés en azimut, dans un champ angulaire en élévation restreint de plus ou moins 3 degrés, et sur une distance restreinte de moins de 100 mètres. Compte tenu des performances limitées d'un tel capteur d'obstacles, un système de détection d'obstacles peut comprendre plusieurs capteurs d'obstacles pour balayer l'espace autour d'une cellule de l'aéronef ce qui peut avoir un impact sur la masse de l'aéronef. En outre, lorsque l'assiette de l'aéronef est modifiée par un mouvement en roulis ou en tangage, le faisceau du capteur d'obstacles LIDAR risque de ne plus entrer en contact avec un obstacle situé à proximité de l'aéronef. A titre d'exemple et du fait du champ angulaire restreint balayé par un tel capteur d'obstacles, en présence d'une assiette en roulis relativement importante de l'aéronef, alors ce champ angulaire balayé peut passer au dessus d'un pylône proche. Le pylône n'est alors pas détecté.

D'autres capteurs d'obstacles LIDAR sont cependant plus performants. Par exemple, un capteur d'obstacles LIDAR moderne peut détecter des obstacles à une distance de l'ordre de 200 mètres, verticalement dans un champ angulaire de plus ou moins 22,5 degrés par rapport à une position médiane, et en azimut à 360 degrés autour de l'aéronef. Ainsi, un tel capteur d'obstacles LIDAR peut par exemple acquérir de l'ordre de 3 millions de points d'obstacles par seconde.

L'utilisation d'un tel capteur d'obstacles LIDAR performant peut être intéressante, par exemple pour utiliser un unique capteur d'obstacles au lieu d'un système présentant plusieurs capteurs d'obstacles moins performants. Cependant, un tel capteur d'obstacles LIDAR performant peut de manière étonnante s'avérer problématique en détectant de très nombreux points appartenant à des obstacles, notamment à proximité du relief. En particulier, le capteur d'obstacles LIDAR performant peut détecter des points appartenant à des obstacles ne présentant pas un danger réel à court terme. Dès lors, le système de détection d'obstacles peut avoir des difficultés pour traiter rapidement l'ensemble des points d'obstacles détectés. De plus, l'afficheur du système de détection d'obstacles peut afficher de fait une représentation de nombreux points d'obstacles. En scrutant un afficheur affichant de nombreux points d'obstacles, un pilote peut alors avoir des difficultés pour analyser de manière objective et rapide les données affichées, en parallèle des autres tâches à accomplir.

Le document EP3236213 décrit un système d'affichage recevant des données d'une pluralité de capteurs pour afficher une illustration tridimensionnelle d'une région entourant un aéronef: Chaque danger est affiché selon une couleur correspondant à sa priorité. Le document EP3236213 évoque la possibilité de régler la puissance des capteurs.

Le document EP3163318 décrit un système de détection d'obstacles qui est muni d'un afficheur et d'un processeur. Le processeur reçoit des données de capteurs qui sont configurés pour détecter des obstacles autour de l'aéronef. Le processeur génère des données d'affichage par secteur et pour une pluralité de blocs au sein des secteurs.

Le document US2013/0332062 A1 décrit un système de détection d'obstacles qui est muni d'un afficheur et d'un processeur.

Les documents US 2013/0282208 A1 et EP 2 138 864 A1 sont aussi connus

La présente invention a alors pour objet de proposer un procédé pour détecter des obstacles performant et rendant intelligible les données mesurées.

L'invention vise ainsi un procédé de détection d'obstacles aux alentours d'un aéronef. Ce procédé comporte les étapes de la revendication 1.

Ainsi, le procédé permet d'utiliser un senseur d'obstacles comprenant par exemple un LIDAR moderne et performant. Comme indiqué précédemment, les performances d'un tel LIDAR peuvent être sources de difficultés.

Les données de positionnement sont obtenues de manière usuelle et comprennent par exemple une distance, un angle de site et/ou un angle de gisement par rapport à l'aéronef.

L'expression « espace environnant » désigne l'espace scruté par le senseur d'obstacles.

L'expression « point d'obstacle » désigne un point d'un obstacle détecté par le senseur d'obstacles.

L'expression « détermination de chaque point d'obstacle situé à l'intérieur d'un volume de détection prédéterminé, chaque point d'obstacle situé à l'intérieur dudit volume de détection étant un point pertinent » signifie que chaque point détecté par le senseur d'obstacle qui est dans l'espace environnant et à la fois dans le volume de détection est un point pertinent. Les points d'obstacles situés en dehors de ce volume de détection sont dits par commodité et opposition « points non pertinents ».

Selon ce procédé, les points d'obstacles sont filtrés afin d'afficher les points pertinents. Les points non pertinents ne sont pas affichés sur l'afficheur. Par exemple un arbre ou le sol peuvent se situer dans le champ scruté par le senseur d'obstacles alors que l'aéronef se situe très au-dessus du sol ou de cet arbre. Le sol ou cet arbre ne constituent par exemple pas un danger immédiat et ne se trouvent pas dans le volume de détection. Dès lors, les points d'obstacles du sol ou de cet arbre seront non pertinents. Le sol ou l'arbre seront éliminés de l'affichage donné au pilote.

Ainsi, le procédé permet de filtrer les mesures du senseur d'obstacles, pour seulement exploiter lors d'une étape d'affichage les mesures relatives à des objets susceptibles de représenter un danger réel, ces objets étant présents dans le volume de détection prédéterminé correspondant à un volume de sécurité et de surveillance autour de l'aéronef.

Le procédé peut être appliqué en utilisant un filtre extrêmement simple et de fait fiable et facilement certifiable, contrairement à des systèmes de traitement complexes visant par exemple à identifier des objets particuliers dans un nuage de points.

Un tel procédé peut par ailleurs être éventuellement appliqué sur certains aéronefs existants.

Le procédé peut de plus comporter une ou plusieurs des caractéristiques qui suivent, prises seules ou en combinaison.

Selon une possibilité; l'espace environnant scruté par le senseur d'obstacles comprend un volume scruté qui peut s'étendre à 360 degrés autour d'un axe de symétrie attaché à l'aéronef, ledit espace environnant s'étendant en élévation dans un champ angulaire s'étendant de part et d'autre d'un plan médian orthogonal audit axe de symétrie.

Le senseur d'obstacles peut ainsi balayer un espace sensiblement annulaire qui entoure l'aéronef et présente une symétrie par rapport à l'axe de symétrie. Eventuellement, le senseur d'obstacles peut comprendre un unique capteur d'obstacles, par exemple de type LIDAR. L'axe de symétrie peut alors passer par ce capteur d'obstacles. En particulier, le capteur d'obstacles peut être mobile en rotation autour de l'axe de symétrie.

L'espace scruté peut correspondre à chaque instant au volume scruté, à la fréquence de scrutation du capteur d'obstacles près.

Alternativement, l'espace scruté peut comporter chaque volume scruté analysé depuis un temps de mesure, à savoir calculé ou prédéfini voire mémorisé.

Un détecteur du senseur d'obstacles peut appliquer un algorithme en amont du filtre pour mémoriser les mesures effectuées par le ou les capteurs d'obstacles sur une période dénommée « temps de mesure » par commodité. Ledit algorithme peut agréger les mesures, l'espace scruté résultant de l'agrégation de tous les volumes scrutés durant cette période et repositionnés en cohérence les uns par rapport aux autres dans un référentiel unique. Le résultat de cette agrégation présente l'intérêt de couvrir un espace scruté bien plus dense et étendu que celui que le capteur d'obstacles peut acquérir à un instant donné. Sur ce résultat d'agrégation, le filtre qui permet d'éliminer les détections qui ne présentent pas un réel danger se trouve donc encore plus déterminant sur le résultat qui va être présenté.

Le temps de mesure peut être au minimum de 2 minutes voire peut correspondre au temps écoulé depuis l'allumage de l'aéronef, le décollage, à savoir le moment ou le ou les trains d'atterrissage ont quitté le sol, l'atteinte d'un point particulier d'une procédure de décollage...

A titre d'exemple, l'espace scruté comporte tous les volumes scrutés depuis deux minutes. Dès lors, ledit algorithme mémorise et repositionne entre eux l'ensemble des détections obtenues depuis deux minutes puis les points d'obstacles détectés sont transmis au filtre qui ne retient que les points pertinents présentant un réel danger pour affichage.

La combinaison de ce type d'algorithme avec le filtre peut permettre à un instant donné de considérer un obstacle qui n'entre pas dans le volume scruté par le capteur d'obstacles à cet instant donné. Selon un exemple donné à titre illustratif, un aéronef peut effectuer un vol vers l'avant et le temps de mesure peut être de deux minutes. A un instant courant, un obstacle situé sous l'aéronef n'est pas détectable par le capteur d'obstacles. Toutefois, une minute auparavant cet obstacle était situé à l'avant de l'aéronef et a pu être détecté par le capteur d'obstacles. A l'instant courant, les points d'obstacles correspondant à cet obstacle sont alors toujours traités par le filtre et sont analysés pour être classés comme étant des points pertinents ou non pertinents.

Eventuellement, le temps de mesure considéré peut être une constante ou peut varier en fonction de la vitesse de déplacement de l'aéronef. Par exemple, quand la vitesse de déplacement est inférieure à une vitesse seuil prédéterminé relativement faible et à titre illustratif de l'ordre de 20 noeuds (environ 37 kilomètres par heure), et au maximum sur toute la durée pendant laquelle la vitesse de déplacement est inferieure à cette vitesse seuil, le temps de mesure considéré peut être calculé à l'aide une fonction linéaire donnant le temps de mesure en fonction de l'inverse de la vitesse de déplacement de l'aéronef. En conséquence, si la position de l'aéronef est quasi stationnaire, cette définition du temps de mesure implique que le système affichera des points d'obstacle pertinents même s'ils ne sont plus dans le champ de scrutation du senseur depuis une durée proche de la durée du vol quasi stationnaire.

Selon une possibilité compatible avec la précédente, ledit champ angulaire peut présenter un angle d'au moins 40 degrés.

Par exemple, le senseur d'obstacles peut comporter un capteur d'obstacles LIDAR dit « à grand angle ».

Selon une possibilité compatible avec les précédentes, ledit affichage peut comporter une étape d'affichage, selon une représentation à deux dimensions, desdits points pertinents vus de dessus ou de dessous de l'aéronef, favorablement vus de dessus, et à 360 degrés autour d'un symbole représentant l'aéronef.

Le senseur d'obstacles peut détecter un très grand nombre de points d'obstacles par seconde, par exemple de l'ordre de plusieurs millions de points d'obstacles. Une telle densité de points d'obstacles peut permettre d'élaborer une représentation en trois dimensions de l'environnement de l'aéronef. La caractéristique précédente va à l'encontre du préjugé consistant à penser qu'une telle représentation est optimale. En effet, une représentation en trois dimensions est dépendante de l'interprétation visuelle qu'en fait le pilote. Lors d'une phase de vol nécessitant une charge de travail importante, un pilote peut avoir des difficultés pour appréhender efficacement et rapidement sa position et percevoir la distance qui le sépare des obstacles en consultant un tel afficheur.

La caractéristique précédente propose un afficheur plus simple représentant, dans une vue de dessus ou de dessous et en deux dimensions, les points pertinents autour d'un symbole représentant l'aéronef. Un tel afficheur en synergie avec un filtrage pertinent des points d'obstacles peut permettre à l'équipage d'appréhender rapidement la direction et la distance des obstacles dangereux qui entourent l'aéronef.

Alternativement, filtré par le même principe, un affichage en trois dimensions reste possible.

Selon une possibilité compatible avec les précédentes, ledit volume de détection peut être attaché à l'aéronef, ledit volume de détection définissant un volume dans lequel un obstacle est susceptible de présenter un danger pour l'aéronef.

L'expression « ledit volume de détection peut être attaché à l'aéronef » signifie que le volume de détection est positionné par rapport à un point d'origine de l'aéronef. Par exemple, ce point d'origine peut être une position d'un capteur d'obstacles du senseur d'obstacles. Par exemple, ce point d'origine peut être le centre de gravité d'un LIDAR. Le volume de détection se déplace conjointement avec le déplacement de l'aéronef.

Par ailleurs, le volume de détection s'étend au dessus d'un plan bas, et avantageusement entre un plan haut inclus et un plan bas inclus, le plan haut et le plan bas étant situés verticalement, à savoir selon un axe vertical, respectivement au-dessus et en dessous de l'aéronef.

Le plan haut et le plan bas délimitent en élévation une bande de l'espace aérien dans laquelle se trouve à la fois l'aéronef et les obstacles susceptibles d'être dangereux.

Le plan haut et le plan bas peuvent être parallèles.

Par exemple, l'aéronef peut être un giravion comprenant une cellule qui s'étend de bas en haut à partir d'un ou de plusieurs trains d'atterrissage jusqu'à un rotor. Les positions du plan haut et du plan bas sont alors par exemple déterminées au regard de tout obstacle qui pourrait entrer en collision avec le rotor ou avec le ou les trains d'atterrissage.

Selon l'invention, le procédé comporte une étape de détermination d'une hauteur de seuil maximale et d'une hauteur de seuil minimale. Ladite hauteur de seuil maximale est une distance séparant ledit plan haut et une référence de l'aéronef selon la verticale, ladite hauteur de seuil minimale étant une distance séparant ladite référence et ledit plan bas selon la verticale.

Cette caractéristique technique a pour effet de positionner le plan bas et le plan haut de manière adéquate pour relever des points pertinents effectivement dangereux.

Le plan haut et le plan bas sont positionnés par rapport à une référence de l'aéronef en déterminant une hauteur de seuil maximale et une hauteur de seuil minimale. La hauteur de seuil maximale et/ou la hauteur de seuil minimale peuvent être mémorisées ou calculées. Par exemple, cette référence peut être une position d'un capteur d'obstacles du senseur d'obstacles. Par exemple, la référence peut être le centre de gravité d'un LIDAR.

Utiliser le capteur d'obstacles du senseur d'obstacles comme référence peut présenter l'avantage de faciliter le positionnement des points d'obstacles relevés par rapport au plan haut et au plan bas. En effet, les points d'obstacles peuvent être relativement facilement positionnés par rapport à ce capteur d'obstacles.

Selon une possibilité compatible avec les précédentes, le procédé peut notamment comporter une détermination d'une hauteur d'obstacle de chaque point d'obstacle par rapport à un plan de référence passant par ladite référence, chaque point pertinent présentant par rapport au plan de référence une hauteur d'obstacle le plaçant entre le plan haut et le plan bas. Le plan de référence peut être parallèle au plan haut et/ou au plan bas.

La hauteur d'obstacle peut être la distance la plus courte entre le plan de référence et le point d'obstacle concerné.

Par exemple, chaque hauteur d'obstacle est par convention positive pour tout objet placé au dessus du plan de référence et négative pour tout objet situé sous le plan de référence, les termes au dessus et en dessous étant à considérer en repère terrestre, et par exemple à la vue d'un observateur présent sur le sol . Ainsi, la hauteur de seuil minimale est négative et la hauteur de seuil maximale est positive. De plus, un point pertinent présente une hauteur d'obstacle comprise par exemple et selon la variante entre la hauteur de seuil minimale incluse et la hauteur de seuil maximale incluse.

Selon une possibilité compatible avec les précédentes, la hauteur d'obstacle d'un dit point d'obstacle peut être fonction de la distance du point d'obstacle par rapport à la référence ainsi que d'un angle de site dudit point d'obstacle par rapport à la référence et d'un angle de gisement du point d'obstacle par rapport à la référence.

Ces trois variables peuvent être déterminées de manière usuelle par un capteur d'obstacles, et notamment un LIDAR. Chaque point d'obstacle peut alors être caractérisé par une distance Dn comprise entre 0 et la distance de détection maximale du senseur d'obstacle, un angle de site par exemple compris entre -25 degrés et +25 degrés par rapport à un plan médian correspondant au milieu du champ balayé, et un angle de gisement compris entre 0 degrés et 360 degrés avec par exemple l'angle de gisement de 0 degré qui correspond à la position d'un nez de l'aéronef et l'angle de gisement de 180 degrés qui correspond à la queue de l'aéronef.

Un angle de roulis et un angle de tangage de l'aéronef mesurés de manière usuelle, par exemple par une centrale inertielle ou des inclinomètres, peuvent aussi être pris en compte pour maintenir dynamiquement le volume de détection relativement à l'environnement terrestre.

Par exemple, ladite hauteur d'obstacle d'un dit point d'obstacle est calculée à l'aide de la relation suivante :

$$Hn=Dn*sin(alphan+(phi*sin(psin))+theta*cos(psin))$$

où « Hn » représente la hauteur d'obstacle, « = » représente le signe de l'égalité, « * » représente le signe de la multiplication, « + » représente le signe de l'addition, « sin » représente la fonction sinus, « cos » représente la fonction cosinus, « Dn » représente la distance du point d'obstacle par rapport à la référence obtenue à l'aide du senseur d'obstacles, « alphan » représente l'angle de site du point d'obstacle obtenu à l'aide du senseur d'obstacles, « psin » représente l'angle de gisement du point d'obstacle obtenu à l'aide du senseur d'obstacles, « phi » représente l'angle de roulis de l'aéronef, « theta » représente l' angle de tangage de l'aéronef.

Selon une possibilité compatible avec les précédentes, ladite hauteur de seuil maximale peut être égale en valeur absolue à la distance séparant un sommet de l'aéronef par rapport à la référence plus une première marge, de sécurité vers le haut, ladite hauteur de seuil minimale est égale en valeur absolue à une distance d'une extrémité d'un train d'atterrissage par rapport à la référence plus une deuxième marge de sécurité vers le bas.

Selon l'invention, ladite hauteur de seuil maximale et ladite hauteur de seuil minimale sont variables en fonction d'au moins un des paramètres suivants : une vitesse verticale de l'aéronef, une hauteur de l'aéronef par rapport au sol, une vitesse d'avancement de l'aéronef.

Selon l'exemple précédent, la première marge et la deuxième marge peuvent par exemple être variables en fonction de cette vitesse verticale et/ou d'une hauteur par rapport au sol et/ou d'une vitesse d'avancement à savoir une vitesse air ou un équivalent. A titre d'exemple, la première marge et la deuxième marge peuvent diminuer lorsque la vitesse verticale diminue.

Selon une première variante de positionnement des plans haut et bas, ledit plan haut et ledit plan bas sont horizontaux.

Selon une deuxième variante de positionnement des plans haut et bas, ledit plan haut et ledit plan bas sont parallèles à une face d'une aire d'atterrissage. Par exemple, le système comprend une interface de réglage permettant de paramétrer une inclinaison d'une telle face, et par exemple du plan de référence précédemment évoqué. Les plans bas et haut sont alors rendus parallèles à cette face de l'aire d'atterrissage en les décalant du plan de référence respectivement de la hauteur de seuil minimale et de la hauteur de seuil maximale par exemple.

Selon une troisième variante de positionnement des plans haut et bas, ledit plan haut et le plan bas sont parallèles à un plan défini par un vecteur vitesse longitudinal et un vecteur vitesse latéral de l'aéronef.

Les variantes peuvent être cumulatives, un individu pouvant choisir une des variantes à l'aide d'une interface de choix par exemple. Selon un autre exemple, la variante à utiliser est choisie automatiquement par un filtre en fonction de la phase de vol, en utilisant par exemple la troisième variante au delà d'une vitesse air prédéterminée, la première variante en dessous de cette vitesse air prédéterminée et au dessus d'une hauteur prédéterminée puis la deuxième variante en dessous de cette vitesse air prédéterminée et en dessous de la hauteur prédéterminée.

Selon une possibilité compatible avec les précédentes, le procédé peut comporter une étape d'enregistrement desdits points d'obstacles dans une mémoire tampon.

Les points d'obstacles peuvent être mémorisés dans une mémoire pendant la durée de la mission par exemple.

Selon une possibilité compatible avec les précédentes, le procédé peut comporter une étape de colorisation de chaque point pertinent en fonction de la nature du matériau d'un obstacle détecté au niveau de ce point pertinent, cette nature pouvant être du groupe des minéraux ou du groupe des métaux ou du groupe des matières organiques ou du groupe des éléments diffus dans l'air.

Un capteur d'obstacles de type LIDAR peut permettre de caractériser de manière usuelle la nature des objets illuminés en fonction du retour du train d'ondes. Ainsi, l'afficheur peut par exemple utiliser une première couleur pour représenter un élément minéral (sol, pierre, ...), une deuxième couleur pour représenter un élément métallique (câble, pylône, ...), une troisième couleur pour représenter un élément organique (feuillage, branche, ...) et une quatrième couleur pour représenter un élément diffus (nuage, poussière, pluie...).

Outre un procédé, l'invention vise un aéronef muni d'un système de détection d'obstacles, ledit système de détection d'obstacles comprenant un senseur d'obstacles et un afficheur.

Le système de détection d'obstacles peut mettre en oeuvre le procédé de l'invention, ledit système de détection d'obstacles ayant un filtre configuré pour déterminer parmi lesdits points d'obstacles chaque point pertinent situé à l'intérieur d'un volume de détection prédéterminé, le volume de détection étant différent dudit espace environnant, ledit afficheur étant configuré pour afficher lesdits points pertinents.

Le senseur d'obstacles peut comprendre un ou plusieurs capteurs d'obstacles renvoyant des informations de distances, par exemple de type LIDAR. Le senseur d'obstacles peut comprendre un détecteur, par exemple un calculateur, pour agréger les mesures réalisées par le ou les capteurs d'obstacles et les transmettre au filtre.

Eventuellement, ledit afficheur peut être un afficheur en deux dimensions.

Eventuellement, ledit aéronef peut comporter un système de mesure mesurant un angle de roulis et un angle de tangage dudit aéronef, ledit filtre coopérant avec ledit système de mesure.

L'invention et ses avantages apparaîtront avec plus de détails dans le cadre de la description qui suit avec des exemples donnés à titre illustratif en référence aux figures annexées qui représentent :

la figure 1, une vue de face d'un aéronef selon l'invention,

la figure 2, une vue de dessus d'un aéronef selon l'invention,

la figure 3, une vue d'un volume scruté à un instant donné par un aéronef selon l'invention,

la figure 4, une vue illustrant le procédé de l'invention lorsque l'aéronef est orienté avec un angle de roulis nul,

la figure 5, une vue illustrant le procédé de l'invention lorsque l'aéronef est orienté avec un angle de roulis non nul,

la figure 6, une vue en trois dimensions schématique illustrant la détection d'obstacles,

la figure 7, une vue d'un afficheur ne correspondant pas à l'invention affichant les points d'obstacles non filtrés et détectés par l'aéronef de la figure 6, cette vue permettant d'illustrer un avantage de l'invention, et

la figure 8, une vue d'un afficheur selon l'invention affichant les points d'obstacles filtrés et détectés par l'aéronef de la figure 6.

Les éléments présents dans plusieurs figures distinctes sont affectés d'une seule et même référence, sauf indication contraire.

Les termes « bas », « haut », « dessus », « dessous », « vertical » « horizontal » ou équivalents employés par la suite sont à considérer au regard d'un individu disposé sur le sol, et lorsque l'aéronef n'est pas dans une position renversée à savoir lorsque l'aéronef est par exemple stationnaire ou n'effectue pas une manoeuvre connue sous l'expression anglaise « looping » par exemple.

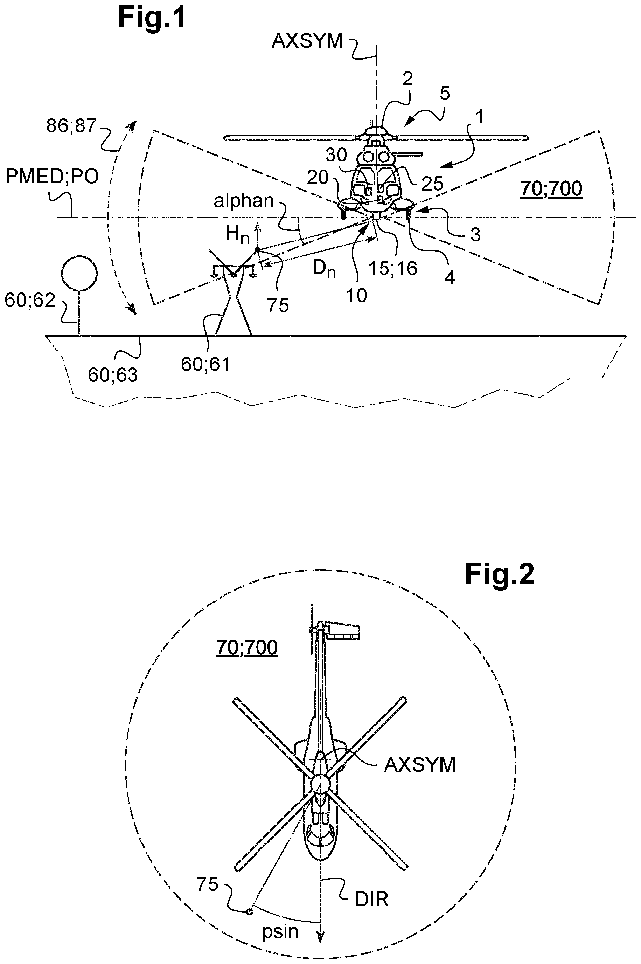

La figure 1 présente un aéronef 1 selon l'invention. De manière optionnelle et non exclusive, cet aéronef 1 peut être un giravion comprenant un rotor 5.

Indépendamment de cet aspect, l'aéronef 1 peut comprendre une cellule qui s'étend de bas en haut d'une extrémité basse dite plus simplement « extrémité 4 » jusqu'à un sommet 2. Selon l'exemple illustré, le sommet 2 peut se situer au niveau du rotor 5, en l'occurrence au niveau d'une coupole du rotor 5. Selon l'exemple illustré, l'extrémité 4 peut être le point le plus proche du sol d'un train d'atterrissage 3, par exemple lorsque l'aéronef 1 est dans une position stationnaire et en l'absence de vent.

Indépendamment de ces aspects, l'aéronef 1 est muni d'un système de détection d'obstacles 10.

Le système de détection d'obstacles 10 est muni d'un senseur d'obstacles 15. Le senseur d'obstacles 15 est configuré pour détecter un ou plusieurs obstacles 60 dans un espace environnant 70. Les obstacles 60 peuvent être de diverses formes, en pouvant par exemple être une partie du relief 63, un arbre 62, un pylône 61, un autre aéronef, une bâtisse, ...

En particulier et en référence à la figure 2, l'espace environnant 70 scruté, et par exemple balayé, par le senseur d'obstacles 15 peut comprendre un volume scruté 700 qui s'étend à 360 degrés autour d'un axe de symétrie AXSYM attaché à l'aéronef 1. En référence à la figure 1, le volume scruté 700 peut s'étendre en élévation et en coupe partielle, à savoir verticalement au regard d'un observateur disposé sur le sol 63, dans un champ angulaire 86 s'étendant de part et d'autre d'un plan médian PMED qui est orthogonal à l'axe de symétrie AXSYM. Le plan médian PMED partage en deux parties égales le champ angulaire 86. En particulier, le champ angulaire 86 peut s'étendre sur un angle 87 d'au moins 40 degrés, et par exemple sur 45 degrés selon l'exemple illustré.

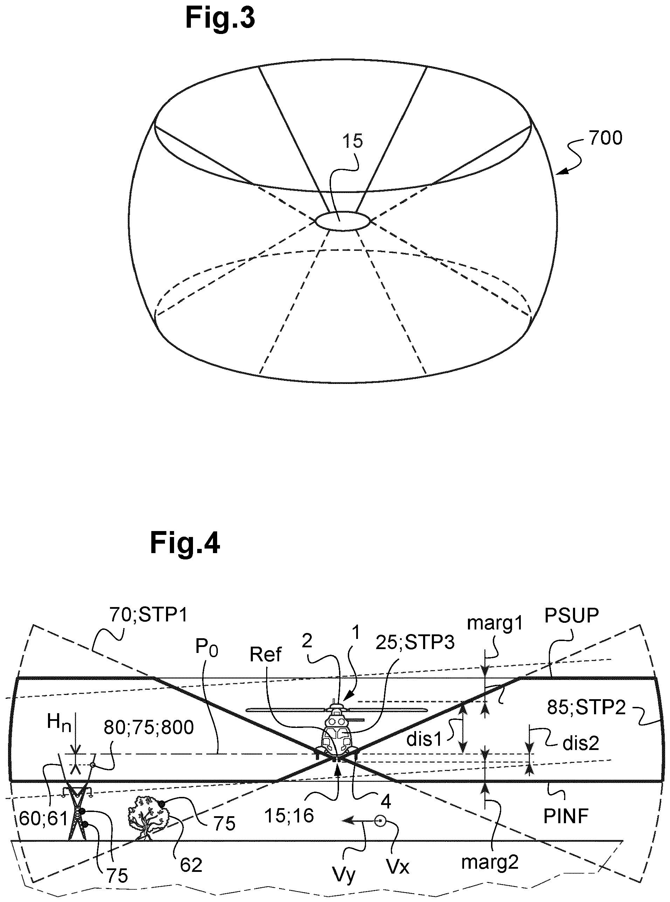

Ainsi et en référence à la figure 3, le volume scruté 700 peut prendre la forme d'un volume obtenu en faisant tourner un secteur d'un disque autour de l'axe de symétrie AXSYM. Un tel volume peut être scruté très rapidement, par exemple à une fréquence de l'ordre de 5 Hertz.

L'espace environnant 70 peut être restreint à ce volume scruté 700.

Alternativement, l'espace environnant 70 peut résulter de l'agrégation de tous les volumes scrutés 700 qui ont été analysés pendant un temps de mesure. Ce temps de mesure peut être fixe en étant mémorisé ou variable en étant calculé par le système et éventuellement par le senseur d'obstacles décrit par la suite ou un calculateur dédié ou non à cette application. Par exemple, le temps de mesure est fonction d'au moins une vitesse de l'aéronef, par exemple en fonction de la vitesse d'air.

Le senseur d'obstacles 15 peut comprendre un ou plusieurs capteurs d'obstacles 16. Par exemple un capteur d'obstacles 16 émet un signal et reçoit le signal renvoyé par un point d'un obstacle 60 le cas échéant. Ce point est dénommé « point d'obstacle ». Par exemple, un capteur d'obstacles 16 peut être du type LIDAR. Par exemple, un capteur d'obstacles 16 peut être rendu mobile par un système motorisé pour effectuer une rotation autour d'un axe et notamment dudit axe de symétrie AXSYM.

Selon une possibilité, le senseur d'obstacles 15 peut être muni d'un unique capteur d'obstacles 16, par exemple de type LIDAR.

Selon un autre aspect, le senseur d'obstacles 15 émet de manière usuelle au moins un signal porteur d'au moins une donnée de positionnement de chaque point d'obstacle 75 détecté. Par exemple, le senseur d'obstacles 15 détermine pour chaque point d'obstacle 75 détecté la distance du point d'obstacle 75 par rapport à une référence ref. Cette référence ref peut être un capteur d'obstacles 16 du senseur d'obstacles 15. Le senseur d'obstacles 15 peut déterminer pour chaque point d'obstacle 75 détecté un angle de site alphan par rapport à la référence ref, et par exemple par rapport au plan médian PMED passant par la référence ref. En référence à la figure 2, le senseur d'obstacles 15 peut déterminer pour chaque point d'obstacle 75 détecté un angle de gisement psin du point d'obstacle par rapport à la référence ref, et par exemple par rapport à une direction DIR vers l'avant passant par cette référence ref.

Le senseur d'obstacles 15 peut comprendre un détecteur muni d'une mémoire qui mémorise tous les points d'obstacles obtenus par le ou les capteurs d'obstacles, éventuellement pendant une période glissante dite « temps de mesure ». Le détecteur peut comprendre de plus un algorithme pour positionner tous les points d'obstacles obtenus pendant le temps de mesure, selon l'exemple précité par rapport à la référence ref et au travers d'une distance ainsi que d'un angle de site et un angle de gisement. Par exemple, cet algorithme est du type connu sous l'acronyme « SLAM » et l'expression anglaise « simultaneous localization and mapping ». Le détecteur peut comprendre au moins un processeur et au moins une mémoire, au moins un circuit intégré, au moins un système programmable, au moins un circuit logique.

Par ailleurs et à nouveau en référence à la figure 1, le système de détection d'obstacles 10 comporte un filtre 20. Le filtre 20 communique par une liaison filaire ou non filaire avec le senseur d'obstacles 15, le cas échéant avec le détecteur et/ou avec chaque capteur d'obstacles.

Le filtre 20 peut comprendre par exemple au moins un processeur et au moins une mémoire, au moins un circuit intégré, au moins un système programmable, au moins un circuit logique, ces exemples ne limitant pas la portée donnée au terme « filtre ». Le terme processeur peut désigner aussi bien une unité centrale de traitement connue sous l'acronyme CPU, une unité de calcul graphique de traitement GPU, une unité digitale connue sous l'acronyme DSP, un microcontrôleur... Le filtre 20 peut comprendre une ou plusieurs unités. Eventuellement, le détecteur et le filtre peuvent faire partie d'un même calculateur.

Eventuellement, le filtre 20 peut communiquer par une liaison filaire ou non filaire avec un système de mesure 30 mesurant un angle de roulis et un angle de tangage dudit aéronef 1. Par exemple, le système de mesure 30 peut comprendre un inclinomètre pour mesurer l'angle de roulis, un inclinomètre pour mesurer l'angle de tangage ou encore une centrale inertielle.

Selon un autre aspect, le système de détection d'obstacles 10 comprend un afficheur 25. L'afficheur 25 peut par exemple être un afficheur à deux dimensions, à savoir un afficheur affichant des informations sur une représentation en deux dimensions. Le filtre 20 et l'afficheur 25 peuvent par exemple partager une même unité. Le filtre 20 peut par exemple être un calculateur d'un dispositif affichage, l'afficheur 25 comprenant notamment un écran du dispositif d'affichage. Le filtre 20 peut comprendre une unité partagée avec le senseur d'obstacles 15.

Le senseur d'obstacles 15, le filtre 20 et l'afficheur 25 sont notamment configurés pour appliquer le procédé selon l'invention.

En référence à la figure 4, ce procédé comporte la scrutation STP1 d'un espace environnant 70 à l'aide du senseur d'obstacles 15. Par exemple, un capteur d'obstacles 16 dit « grand angle » est mobile en rotation autour de l'axe de symétrie AXSYM pour détecter les obstacles présents dans l'espace environnant à analyser. L'expression « espace environnant » désigne un volume sondé par le senseur d'obstacles 15. Le senseur d'obstacles 15 scrute tout l'espace environnant qu'il est à même de scruter, cet espace environnant étant fixe et dépendant du senseur et non pas réglable.

Le senseur d'obstacles 15 génère, pour chaque point d'obstacle 75 détecté, au moins une donnée de positionnement transmise au filtre 20. Eventuellement le filtre 20 traite les données de positionnement émises pendant un temps de mesure.

Par exemple, le senseur d'obstacles 15 transmet au filtre 20, pour chaque point d'obstacle 75 détecté, la distance Dn, l'angle de site alphan et l'angle de gisement psin décrits précédemment.

Des obstacles 60 non dangereux pour l'aéronef peuvent être détectés en raison des grandes dimensions de l'espace environnant 70 scruté. Selon la figure 4, un arbre 62 non dangereux peut être considéré comme étant un obstacle 60.

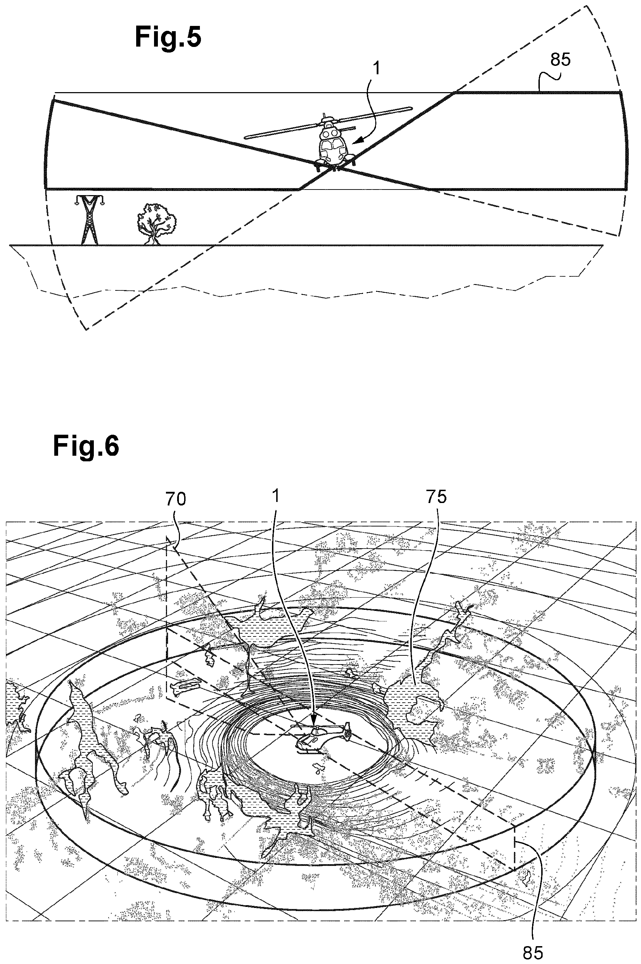

En référence à la figure 5, la détection de points d'obstacles 75 relatifs à des obstacles non dangereux peut être accrue en fonction de l'angle de roulis ou de l'angle de tangage de l'aéronef 1.

Selon l'invention et en référence à nouveau à la figure 4, le procédé comporte alors la détermination STP2, parmi tous les points d'obstacles 75 et avec le filtre 20, de chaque point pertinent 80, chaque point d'obstacle situé à l'intérieur d'un volume de détection 85 prédéterminé étant un point pertinent. Ce volume de détection 85 est de fait différent de l'espace environnant 70, mais le volume de détection 85 et l'espace environnant 70 comprennent un volume commun. Le volume de détection 85 peut être attaché à l'aéronef 1. Le volume de détection 85 représente un volume dans lequel un point d'obstacle d'un obstacle 60 est susceptible de présenter un danger pour l'aéronef 1.

Ainsi, selon le procédé le filtre 20 sélectionne des points dits « points pertinents » jugés potentiellement dangereux parmi tous les points d'obstacles relevés. Par exemple, un point d'obstacle 800 du pylône 61 est jugé pertinent alors que tous les points d'obstacles 75 appartenant à l'arbre 62 sont jugés non pertinents.

Le procédé comporte alors l'affichage STP3 sur l'afficheur 25 desdits points pertinents 80, les points d'obstacles 75 jugés non pertinents n'étant pas affichés.

Ainsi le filtre 20 est configuré pour déterminer si un point d'obstacle 75 est un point pertinent 80, à savoir un point appartenant au volume de détection 85, ou à l'inverse un point non pertinent et l'afficheur 25 est configuré pour afficher seulement les points d'obstacles de type point pertinent 80, les points non pertinents n'étant pas affichés.

Selon un autre aspect, le volume de détection 85 peut s'étendre au dessus d'un plan bas PINF, voire entre un plan haut PSUP inclus et un plan bas PINF inclus. Le plan haut PSUP et le plan bas PINF sont éventuellement parallèles voire horizontaux. Par exemple, le volume de détection a la forme d'un bandeau en couvrant tout l'espace présent à 360 degrés autour de l'aéronef entre le plan bas PINF et le plan haut PSUP.

Le plan haut PSUP et le plan bas PINF sont situés verticalement et respectivement au dessus et en dessous de l'aéronef 1, l'aéronef étant alors positionné dans l'espace présent entre le plan haut PSUP et le plan bas PINF. Ainsi, l'aéronef 1 et des obstacles 60 potentiellement dangereux à court terme se situent dans un espace compris entre le plan bas PINF et le plan haut PSUP.

Le filtre 20 peut donc être configuré pour déterminer si un point d'obstacle 75 appartient ou non au volume de détection.

Par exemple, le filtre 20 peut être configuré pour déterminer une hauteur de seuil maximale H1 et une hauteur de seuil minimale H2.

La hauteur de seuil maximale H1 représente une distance séparant la référence ref de l'aéronef 1 et un point du plan haut PSUP verticalement, à savoir selon la pesanteur. De même, la hauteur de seuil minimale H2 représente une distance séparant la référence ref de l'aéronef 1 et un point du plan bas PINF selon la pesanteur.

Par exemple, la hauteur de seuil maximale H1 peut être égale en valeur absolue à la distance dis1, séparant le sommet 2 de l'aéronef 1 et la référence ref, plus une première marge marg1 soit H1=dis1+marg1. De même, la hauteur de seuil minimale H2 peut être égale en valeur absolue à la distance dis2, séparant l'extrémité 4 d'un train d'atterrissage 3 et la référence ref, plus une deuxième marge marg2 soit H2=dis2+marg2.

Eventuellement, la hauteur de seuil maximale H1 et la hauteur de seuil minimale H2 sont variables en fonction uniquement d'une vitesse verticale de l'aéronef 1. Selon l'exemple précèdent, la première marge marg1 peut être égale à une constante multipliée par la vitesse verticale VZ. De même, la deuxième marge marg2 peut être égale à une constante multipliée par la vitesse verticale VZ.

De manière alternative, la hauteur de seuil maximale H1 et la hauteur de seuil minimale H2 sont variables en fonction d'un ou de plusieurs des paramètres suivants : une vitesse verticale VZ de l'aéronef 1, une hauteur de l'aéronef 1 par rapport au sol, une vitesse d'avancement de l'aéronef 1.

Selon une première variante illustrée en traits pleins, le plan haut PSUP et le plan bas PINF sont horizontaux et positionnées respectivement à la hauteur de seuil maximale H1 et à la hauteur de seuil minimale H2 par rapport à la référence ref. En référence à la figure 5, les marges permettent de garantir que l'aéronef 1 reste entre le plan bas PINF et le plan haut PSUP suite à une modification de son assiette, par exemple en roulis.

Selon une deuxième variante, le plan haut PSUP et le plan bas PINF sont parallèles à un plan contenant une aire d'atterrissage.

Selon une troisième variante illustrée sur la figure 4 avec des traits discontinus, le plan haut PSUP et le plan bas PINF sont parallèles à un plan défini par un vecteur vitesse longitudinal Vx et un vecteur vitesse latéral Vy usuels de l'aéronef 1.

A cet effet, le filtre 20 peut communiquer avec un senseur de vitesse longitudinale usuel et un senseur de vitesse latérale usuel.

Indépendamment de la variante, le procédé peut comporter une étape de détermination par le filtre 20 d'une hauteur d'obstacle Hn de chaque point d'obstacle 75, par rapport à un plan de référence P0 passant par la référence ref. Par exemple, le plan de référence P0 peut être un plan horizontal, un plan confondu avec le plan médian, un plan parallèle au plan haut PSUP.

Le filtre 20 détermine alors, à l'aide de cette hauteur d'obstacle Hn, si le point d'obstacle 75 est situé entre le plan haut PSUP inclus et le plan bas PINF inclus.

Par exemple, la hauteur d'obstacle Hn d'un point d'obstacle 75 est fonction de la distance du point d'obstacle 75 par rapport à la référence ref ainsi que de son angle de site alphan et de son angle de gisement psin. Eventuellement, la hauteur d'obstacle Hn d'un point d'obstacle 75 est calculée à l'aide de la relation suivante :

$$Hn = Dn*sin(alphan + (phi*sin(psin)) + theta*cos(psin))$$

où « Hn » représente la hauteur d'obstacle, « = » représente le signe de l'égalité, « * » représente le signe de la multiplication, « + » représente le signe de l'addition, « sin » représente la fonction sinus, « cos » représente la fonction cosinus, « Dn » représente la distance du point par rapport à la référence obtenue à l'aide du senseur d'obstacles, « alphan » représente l'angle de site du point obtenu à l'aide du senseur d'obstacles, « psin » représente l'angle de gisement du point d'obstacle obtenu à l'aide du senseur d'obstacles, « phi » représente l'angle de roulis de l'aéronef, « theta » représente l'angle de tangage de l'aéronef.

Notamment dans le cadre la première variante, si un point d'obstacle 75 présente une hauteur d'obstacle supérieure ou égale à la hauteur de seuil minimale H2 et inférieure ou égale à la hauteur de seuil maximale H1, et en considérant que la hauteur de seuil minimale H2 est de signe négatif et que la hauteur de seuil maximale H1 est de signe positif, alors ce point d'obstacle 75 est considéré comme étant un point pertinent 80 par le filtre 20.

La figure 6 illustre un aéronef 1 selon l'invention appliquant le procédé de l'invention.

En vol, le senseur d'obstacles 15 de l'aéronef 1 scrute l'espace environnant 70. Le filtre 20 détermine les points d'obstacles pertinents. Cette figure 6 est une illustration schématique. Des obstacles sont schématisés par des zones hachurées pour illustrer l'invention.

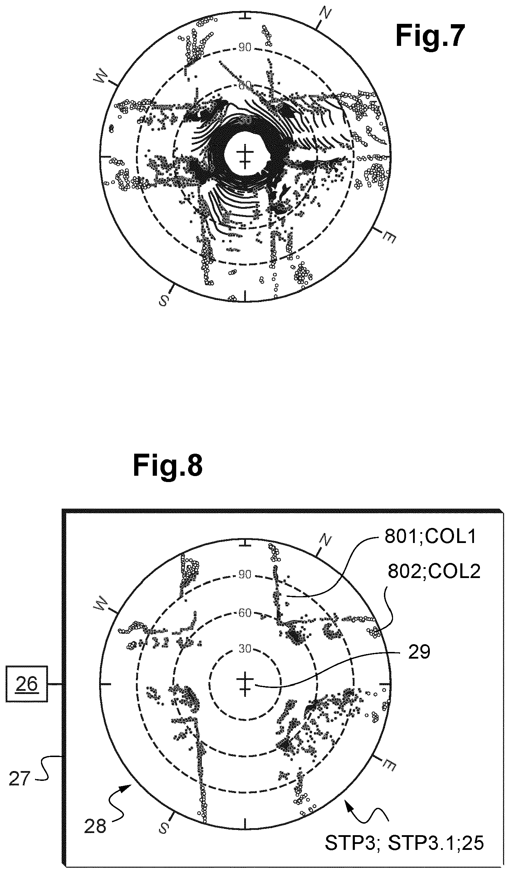

La figure 7 illustre un afficheur qui afficherait tous les points d'obstacles 75 obtenus au point de vol illustré sur la figure 6. On constate qu'un pilote ne peut pas exploiter les informations affichées.

La figure 8 illustre l'affichage uniquement des points pertinents 80 sur un afficheur 25, selon une représentation 28 à deux dimensions. Les points pertinents 80 sont affichés par l'afficheur 25, au travers de pixels, vus de dessus de l'aéronef 1 et à 360 degrés autour d'un symbole 29 représentant l'aéronef 1.

Les informations affichées deviennent intelligibles et contribuent ainsi à la sécurité du vol.

Eventuellement, l'afficheur 25 peut mettre en oeuvre une étape de colorisation STP3.1. Durant cette étape de colorisation STP3.1, l'afficheur 25 affecte une couleur à chaque point pertinent 80 en fonction de la nature du matériau de l'obstacle détecté au niveau de ce point pertinent 80. Ainsi, un premier point pertinent 801 peut présenter une première couleur COL1 alors qu'un autre point pertinent 802 présente une autre couleur COL2.

Cette nature peut être évaluée de manière usuelle par le senseur d'obstacles 15. Ainsi, chaque point pertinent 80 peut présenter une première couleur lorsque l'obstacle 60 est détecté comme appartenant au groupe des minéraux, une deuxième couleur lorsque l'obstacle 60 est détecté comme appartenant groupe des métaux, une troisième couleur lorsque l'obstacle 60 est détecté comme appartenant au groupe des matières organiques, une quatrième couleur lorsque l'obstacle 60 est détecté comme appartenant au groupe des éléments diffus dans l'air. Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles.

## Revendications

**1.** Procédé de détection d'obstacles (60) aux alentours d'un aéronef (1), le procédé comportant les étapes suivantes :

- scrutation (STP1) d'un espace environnant (70) à l'aide d'un senseur d'obstacles (15), ledit senseur d'obstacles (15) générant des données de positionnement relatives à une pluralité de points d'obstacles (75),
- détermination (STP2) de chaque point d'obstacle (75) situé à l'intérieur d'un volume de détection (85), chaque point d'obstacle (75) situé à l'intérieur dudit volume de détection (85) étant un point pertinent, le volume de détection (85) étant différent dudit espace environnant (70) scruté, chaque point d'obstacle (75) situé en dehors de ce volume de détection (85) étant un point non pertinent, ledit volume de détection (85) s'étendant entre un plan haut (PSUP) inclus et un plan bas (PINF) inclus, le plan haut (PSUP) et le plan bas (PINF) étant situés verticalement et respectivement au dessus et en dessous de l'aéronef (1), le procédé comportant une étape de détermination d'une hauteur de seuil maximale (H1) et d'une hauteur de seuil minimale (H2), ladite hauteur de seuil maximale (H1) étant une distance séparant ledit plan haut (PSUP) et une référence (ref) de l'aéronef selon la verticale, ladite hauteur de seuil minimale (H2) étant une distance séparant ladite référence (ref) et ledit plan bas (PINF) selon la verticale, ladite hauteur de seuil maximale (H1) et ladite hauteur de seuil minimale (H2) étant variables en fonction d'au moins un des paramètres suivants : une vitesse verticale de l'aéronef (1), une hauteur de l'aéronef (1) par rapport au sol, une vitesse d'avancement de l'aéronef (1).
- affichage (STP3) sur un afficheur (25) desdits points pertinents (80), aucun point non pertinent n'étant affiché sur l'afficheur.

**2.** Procédé selon la revendication 1,
**caractérisé en ce que** ledit espace environnant (70) scruté par le senseur d'obstacles comprend un volume scruté (700) qui s'étend à 360 degrés autour d'un axe de symétrie (AXSYM) attaché à l'aéronef (1), ledit espace environnant (70) s'étendant en élévation dans un champ angulaire (85) s'étendant de part et d'autre d'un plan médian (PMED) orthogonal audit axe de symétrie (AXSYM).

**3.** Procédé selon la revendication 2,
**caractérisé en ce que** ledit champ angulaire (85) présente un angle d'au moins 40 degrés.

**4.** Procédé selon l'une quelconque des revendications 2 à 3, **caractérisé en ce que** ledit espace scruté (70) comporte chaque volume scruté analysé depuis un temps de mesure.

**5.** Procédé selon l'une quelconque des revendications 1 à 4, **caractérisé en ce que** ledit affichage comporte une étape d'affichage, selon une représentation (28) à deux dimensions, desdits points pertinents (80) vus de dessus ou de dessous de l'aéronef (1) et à 360 degrés autour d'un symbole (29) représentant l'aéronef (1).

**6.** Procédé selon l'une quelconque des revendications 1 à 5, **caractérisé en ce que** ledit volume de détection (85) est attaché à l'aéronef (1), ledit volume de détection (85) définissant un volume dans lequel un obstacle est susceptible de présenter un danger pour l'aéronef (1).

**7.** Procédé selon l'une quelconque des revendications 1 à 6, **caractérisé en ce que** le procédé comporte une détermination d'une hauteur d'obstacle (Hn) de chaque point d'obstacle (75) par rapport à un plan de référence (P0) passant par ladite référence (ref), chaque point pertinent présentant par rapport au plan de référence (P0) une hauteur d'obstacle (Hn) le plaçant entre le plan haut (PSUP) et le plan bas (PINF).

**8.** Procédé selon la revendication 7,
**caractérisé en ce que** ladite hauteur d'obstacle (Hn) d'un dit point d'obstacle (75) est fonction de la distance du point d'obstacle (75) par rapport à la référence (ref) ainsi que d'un angle de site (alphan) dudit point d'obstacle (75) par rapport à la référence (ref) et d'un angle de gisement (psin) du point d'obstacle par rapport à la référence (ref).

**9.** Procédé selon l'une quelconque des revendications 7 à 8, **caractérisé en ce que** ladite hauteur d'obstacle (Hn) d'un dit point d'obstacle (75) est calculée à l'aide de la relation suivante :

$$Hn = Dn * \sin(alphan + (phi * \sin(psin)) + theta * \cos(psin))$$

où « Hn » représente la hauteur d'obstacle, « = » représente le signe de l'égalité, « * » représente le signe de la multiplication, « + » représente le signe de l'addition, « sin » représente la fonction sinus, « cos » représente la fonction cosinus, « Dn » représente la distance du point d'obstacle par rapport à la référence obtenue à l'aide du senseur d'obstacles, « alphan » représente l'angle de site du point d'obstacle obtenu à l'aide du senseur d'obstacles, « psin » représente l'angle de gisement du point d'obstacle obtenu à l'aide du senseur d'obstacles, « phi » représente un angle de roulis de l'aéronef, « theta » représente un angle de tangage de l'aéronef.

10. Procédé selon l'une quelconque des revendications 1 à 9, **caractérisé en ce que** ladite hauteur de seuil maximale (H1) est égale en valeur absolue à la distance séparant un sommet (2) de l'aéronef (1) par rapport la référence (ref) plus une première marge (marg1), ladite hauteur de seuil minimale (H2) est égale en valeur absolue à une distance d'une extrémité (4) d'un train d'atterrissage (3) par rapport à la référence (ref) plus une deuxième marge (marg2).

11. Procédé selon l'une quelconque des revendications 1 à 10, **caractérisé en ce que** ledit plan haut (PSUP) et ledit plan bas (PINF) sont horizontaux.

12. Procédé selon l'une quelconque des revendications 1 à 10, **caractérisé en ce que** ledit plan haut (PSUP) et le plan bas (PINF) sont parallèles à un plan défini par un vecteur vitesse longitudinal (Vx) et un vecteur vitesse latérale (Vy) de l'aéronef (1).

13. Procédé selon l'une quelconque des revendications 1 à 12, **caractérisé en ce que** le procédé comporte une étape de colorisation (STP3.1) de chaque point pertinent (80) en fonction de la nature du matériau d'un obstacle détecté au niveau de ce point pertinent (80), cette nature pouvant être du groupe des minéraux ou du groupe des métaux ou du groupe des matières organiques ou du groupe des éléments diffus dans l'air.

14. Aéronef (1) muni d'un système de détection d'obstacles (10), ledit système de détection d'obstacles (10) comprenant un senseur d'obstacles (15) et un afficheur (25), **caractérisé en ce que** ledit système de détection d'obstacles (10) met en oeuvre le procédé selon l'une quelconque des revendications 1 à 13, ledit système de détection d'obstacles (10) ayant un filtre (20) configuré pour déterminer parmi lesdits points d'obstacles (75) chaque point pertinent (80) situé à l'intérieur d'un volume de détection (85) prédéterminé, le volume de détection (85) étant différent dudit espace environnant (70), ledit afficheur (25) étant configuré pour afficher lesdits points pertinents (80).

15. Aéronef selon la revendication 14, **caractérisé en ce que** ledit afficheur (25) est un afficheur en deux dimensions.

16. Aéronef selon l'une quelconque des revendications 14 à 15, **caractérisé en ce que** ledit aéronef (1) comporte un système de mesure (30) mesurant un angle de roulis et un angle de tangage dudit aéronef (1), ledit filtre (20) coopérant avec ledit système de mesure (30).

**Patentansprüche**

1. Verfahren zum Erkennen von Hindernissen (60) in der Umgebung eines Luftfahrzeugs (1), wobei das Verfahren die folgenden Schritte umfasst:

   - Abtasten (STP1) eines umgebenden Raums (70) mit einem Hindernissensor (15), wobei der Hindernissensor (15) Positionsdaten in Bezug auf eine Mehrzahl von Hindernispunkten (75) erzeugt,
   - Bestimmen (STP2) jedes Hindernispunkts (75), der sich innerhalb eines Erfassungsvolumens (85) befindet, wobei jeder Hindernispunkt (75), der sich innerhalb des Erfassungsvolumens (85) befindet, ein relevanter Punkt ist, wobei sich das Erfassungsvolumen (85) von dem abgetasteten umgebenden Raum (70) unterscheidet, jeder Hindernispunkt (75) außerhalb dieses Erfassungsvolumens (85) ein irrelevanter Punkt ist, das Erfassungsvolumen (85) sich zwischen einer eingeschlossenen oberen Ebene (PSUP) und einer eingeschlossenen unteren Ebene (PINF) erstreckt, und die obere Ebene (PSUP) und die untere Ebene (PINF) vertikal oberhalb bzw. unterhalb des Luftfahrzeugs (1) angeordnet sind, wobei das Verfahren einen Schritt des Bestimmens einer maximalen Schwellenhöhe (H1) und einer minimalen Schwellenhöhe (H2) umfasst, wobei die maximale Schwellenhöhe (H1) ein Abstand ist, der die obere Ebene (PSUP) und einen Bezugspunkt (ref) des Luftfahrzeugs in der Vertikalen trennt, wobei die minimale Schwellenhöhe (H2) ein Abstand ist, der den Bezugspunkt (ref) und die untere Ebene (PINF) in der Vertikalen trennt, wobei die maximale Schwellenhöhe (H1) und die minimale Schwellenhöhe (H2) in Abhängigkeit von mindestens einem der folgenden Parameter variabel sind: einer vertikalen Geschwindigkeit des Luftfahrzeugs (1), einer Höhe des Luftfahrzeugs (1) in Bezug zum Boden, einer Vorwärtsgeschwindigkeit des Luftfahrzeugs (1),
   - Anzeigen (STP3) der relevanten Punkte (80) auf einem Display (25), ohne einen irrelevanten Punkt auf dem Display anzuzeigen.

**2.** Verfahren nach Anspruch 1,
**dadurch gekennzeichnet, dass** der von dem Hindernissensor abgetastete Umgebungsraum (70) ein abgetastetes Volumen (700) umfasst, das sich über 360 Grad um eine an dem Flugzeug (1) angebrachte Symmetrieachse (AXSYM) erstreckt, wobei sich der Umgebungsraum (70) in Elevation in einem Winkelfeld (85) erstreckt, das sich auf beiden Seiten einer zu der Symmetrieachse (AXSYM) orthogonalen Mittelebene (PMED) erstreckt.

**3.** Verfahren nach Anspruch 2,
**dadurch gekennzeichnet, dass** das Winkelfeld (85) einen Winkel von mindestens 40 Grad aufweist.

**4.** Verfahren nach einem der Ansprüche 2 bis 3,
**dadurch gekennzeichnet, dass** der abgetastete Raum (70) jedes seit einer Messzeit analysierte abgetastete Volumen enthält.

**5.** Verfahren nach einem der Ansprüche 1 bis 4,
**dadurch gekennzeichnet, dass** das Anzeigen einen Schritt umfasst, bei dem die relevanten Punkte (80) in einer zweidimensionalen Darstellung (28) von oben oder von unten auf das Flugzeug (1) gesehen und um 360 Grad um ein das Flugzeug (1) darstellendes Symbol (29) herum angezeigt werden.

**6.** Verfahren nach einem der Ansprüche 1 bis 5,
**dadurch gekennzeichnet, dass** das Erfassungsvolumen (85) an das Luftfahrzeug (1) gekoppelt ist, wobei das Erfassungsvolumen (85) ein Volumen definiert, in dem ein Hindernis in der Lage ist, eine Gefahr für das Luftfahrzeug (1) darzustellen.

**7.** Verfahren nach einem der Ansprüche 1 bis 6,
**dadurch gekennzeichnet, dass** das Verfahren eine Bestimmung einer Hindernishöhe (Hn) jedes Hindernispunkts (75) in Bezug auf eine durch die Referenz (ref) verlaufende Referenzebene (P0) umfasst, wobei jeder relevante Punkt in Bezug auf die Referenzebene (P0) eine Hindernishöhe (Hn) aufweist, die ihn zwischen der oberen Ebene (PSUP) und der unteren Ebene (PINF) platziert.

**8.** Verfahren nach Anspruch 7,
**dadurch gekennzeichnet, dass** die Hindernishöhe (Hn) eines der Hindernispunkte (75) von der Entfernung des Hindernispunktes (75) von der Referenz (ref) sowie von einem Höhenwinkel (alphan) des Hindernispunktes (75) in Bezug auf die Referenz (ref) und einem Peilwinkel (psin) des Hindernispunktes in Bezug auf die Referenz (ref) abhängt.

**9.** Verfahren nach einem der Ansprüche 7 bis 8,
**dadurch gekennzeichnet, dass** die Hindernishöhe (Hn) eines der Hindernispunkte (75) mittels der folgenden Beziehung berechnet wird:

$$Hn = Dn*\sin(alphan+(phi*\sin(psin))+theta*\cos(psin))$$

wobei "Hn" für die Hindernishöhe, "=" für das Gleichheitszeichen, "*" für das Multiplikationszeichen, "+" für das das Additionszeichen, "sin" für die die Sinusfunktion, "cos" die für die Kosinusfunktion, "Dn" für die mit Hilfe des Hindernissensors ermittelte Entfernung des Hindernispunkts von der Referenz, "alphan" für den mit Hilfe des Hindernissensors ermittelten Höhenwinkel des Hindernispunkts, "psin" für den mit Hilfe des Hindernissensors ermittelten Peilwinkel des Hindernispunkts, "phi" für einen Rollwinkel des Luftfahrzeugs, "theta" für einen Nickwinkel des Luftfahrzeugs steht.

**10.** Verfahren nach einem der Ansprüche 1 bis 9,
**dadurch gekennzeichnet, dass** die maximale Schwellenhöhe (H1) vom Betrag gleich dem Abstand zwischen einem Scheitelpunkt (2) des Luftfahrzeugs (1) und der Referenz (ref) plus einer ersten Marge (marg1) ist und die minimale Schwellenhöhe (H2) vom Betrag gleich einem Abstands eines Endes (4) eines Fahrwerks (3) von der Referenz (ref) plus einer zweiten Marge (marg2) ist.

**11.** Verfahren nach einem der Ansprüche 1 bis 10,
**dadurch gekennzeichnet, dass** die obere Ebene (PSUP) und die untere Ebene (PINF) horizontal sind.

**12.** Verfahren nach einem der Ansprüche 1 bis 10,
**dadurch gekennzeichnet, dass** die obere Ebene (PSUP) und die untere Ebene (PINF) parallel zu einer Ebene sind, die durch einen Längsgeschwindigkeitsvektor (Vx) und einen Quergeschwindigkeitsvektor (Vy) des Luftfahrzeugs (1) definiert ist.

**13.** Verfahren nach einem der Ansprüche 1 bis 12,
**dadurch gekennzeichnet, dass** das Verfahren einen Schritt des Einfärbens (STP3.1) jedes relevanten Punkts (80) in Abhängigkeit von der Art des Materials eines an diesem relevanten Punkt (80) erfassten Hindernisses umfasst, wobei diese Art aus der Gruppe der Mineralien oder der Gruppe der Metalle oder der Gruppe der organischen Stoffe oder der Gruppe der in der Luft verteilten Elemente stammen kann.

**14.** Luftfahrzeug (1), das mit einem Hinderniserkennungssystem (10) ausgestattet ist, wobei das Hinderniserkennungssystem (10) einen Hindernissensor (15) und ein Display (25) umfasst,
**dadurch gekennzeichnet, dass** das Hinderniserkennungssystem (10) das Verfahren nach einem der Ansprüche 1 bis 13 durchführt, wobei das Hinderniserkennungssystem (10) einen Filter (20) aufweist, der konfiguriert ist, um unter den Hindernispunkten (75) jeden relevanten Punkt (80) zu bestimmen, der sich innerhalb eines vorgegebenen Erfassungsvolumens (85) befindet, wobei sich das Erfassungsvolumen (85) von dem umgebenden Raum (70) unterscheidet, und wobei das Display (25) konfiguriert ist, um die relevanten Punkte (80) anzuzeigen.

**15.** Luftfahrzeug nach Anspruch 14,
**dadurch gekennzeichnet, dass** das Display (25) ein zweidimensionales Display ist.

**16.** Luftfahrzeug nach einem der Ansprüche 14 bis 15,
**dadurch gekennzeichnet, dass** das Luftfahrzeug (1) ein Messsystem (30) aufweist, das einen Rollwinkel und einen Nickwinkel des Luftfahrzeugs (1) misst, wobei der Filter (20) mit dem Messsystem (30) zusammenwirkt.

**Claims**

**1.** Method for detecting obstacles (60) in the vicinity of an aircraft (1),
the method comprising the following steps:

- scanning (STP1) a surrounding space (70) using an obstacle sensor (15), said obstacle sensor (15) generating positioning data relating to a plurality of obstacle points (75);
- determining (STP2) each obstacle point (75) located within a detection area (85), each obstacle point (75) located within said detection area (85) being a relevant point, the detection area (85) being different from said scanned surrounding space (70), each obstacle point (75) located outside this detection area (85) being an irrelevant point, said detection area (85) extending between an inclusive upper plane (PSUP) and an inclusive lower plane (PINF), the upper plane (PSUP) and the lower plane (PINF) being located vertically and respectively being above and below the aircraft (1), the method comprising a step of determining a maximum threshold height (H1) and a minimum threshold height (H2), said maximum threshold height (H1) being a distance vertically separating said upper plane (PSUP) and a reference (ref) of the aircraft, said minimum threshold height (H2) being a distance vertically separating said reference (ref) and said lower plane (PINF), said maximum threshold height (H1) and said minimum threshold height (H2) being variable as a function of at least one of the following parameters: a vertical speed of the aircraft (1), a height of the aircraft (1) relative to the ground, a forward speed of the aircraft (1);
- displaying (STP3) said relevant points (80) on a display (25), with no irrelevant point being displayed on the display.

**2.** Method according to Claim 1,
**characterised in that** said surrounding space (70) scanned by the obstacle sensor comprises a scanned area (700) that extends by 360 degrees around an axis of symmetry (AXSYM) associated with the aircraft (1), said surrounding space (70) extending by elevation in an angular field (85) extending on either side of a median plane (PMED) orthogonal to said axis of symmetry (AXSYM).

**3.** Method according to Claim 2,
**characterised in that** said angular field (85) assumes an angle of at least 40 degrees.

4. Method according to any one of Claims 2 to 3,
**characterised in that** said scanned space (70) includes each scanned area analysed from a measurement time.

5. Method according to any one of Claims 1 to 4,
**characterised in that** said display comprises a step of displaying said relevant points (80) as a two-dimensional representation (28), as seen from above or below the aircraft (1) and 360 degrees around a symbol (29) representing the aircraft (1).

6. Method according to any one of Claims 1 to 5,
**characterised in that** said detection area (85) is associated with the aircraft (1), said detection area (85) defining an area in which an obstacle is likely to present a danger to the aircraft (1).

7. Method according to any one of Claims 1 to 6,
**characterised in that** the method comprises determining an obstacle height (Hn) of each obstacle point (75) relative to a reference plane (P0) passing through said reference (ref), each relevant point having an obstacle height (Hn) relative to the reference plane (P0) that places it between the upper plane (PSUP) and the lower plane (PINF).

8. Method according to Claim 7,
**characterised in that** said obstacle height (Hn) of one of said obstacle points (75) is a function of the distance of the obstacle point (75) from the reference (ref), as well as of an elevation angle (alphan) of said obstacle point (75) relative to the reference (ref) and of a bearing angle (psin) of the obstacle point relative to the reference (ref).

9. Method according to any one of Claims 7 to 8,
**characterised in that** said obstacle height (Hn) of one of said obstacle points (75) is computed using the following relationship: Hn = Dn*sin(alphan+(phi*sin(psin))+theta*cos(psin)), where "Hn" represents the obstacle height, "=" represents the equals sign, "*" represents the multiplication sign, "+" represents the addition sign, "sin" represents the sine function, "cos" represents the cosine function, "Dn" represents the distance of the obstacle point from the reference obtained using the obstacle sensor, "alphan" represents the elevation angle of the obstacle point obtained using the obstacle sensor, "psin" represents the bearing angle of the obstacle point obtained using the obstacle sensor, "phi" represents a roll angle of the aircraft, "theta" represents a pitch angle of the aircraft.

10. Method according to any one of Claims 1 to 9,
**characterised in that** said maximum threshold height (H1) is equal by absolute value to the distance separating a vertex (2) of the aircraft (1) from the reference (ref) plus a first margin (marg1), said minimum threshold height (H2) is equal by absolute value to a distance from an end (4) of a set of landing gear (3) from the reference (ref) plus a second margin (marg2).

11. Method according to any one of Claims 1 to 10,
**characterised in that** said upper plane (PSUP) and said lower plane (PINF) are horizontal.

12. Method according to any one of Claims 1 to 10,
**characterised in that** said upper plane (PSUP) and the lower plane (PINF) are parallel to a plane defined by a longitudinal speed vector (Vx) and a lateral speed vector (Vy) of the aircraft (1).

13. Method according to any one of Claims 1 to 12,
**characterised in that** the method comprises a step (STP3.1) of colouring each relevant point (80) as a function of the nature of the material of an obstacle detected in the vicinity of this relevant point (80), this nature can be from the group of minerals or from the group of metals or from the group of organic materials or from the group of airborne elements.

14. Aircraft (1) provided with an obstacle detection system (10), said obstacle detection system (10) comprising an obstacle sensor (15) and a display (25), **characterised in that** said obstacle detection system (10) implements the method according to any one of Claims 1 to 13, said obstacle detection system (10) having a filter (20) configured to determine, from among said obstacle points (75), each relevant point (80) located within a predetermined detection area (85), the detection area (85) being different from said surrounding space (70), said display (25) being configured to display said relevant points (80).

15. Aircraft according to Claim 14,

**characterised in that** said display (25) is a two-dimensional display.

16. Aircraft according to any one of Claims 14 to 15,
**characterised in that** said aircraft (1) comprises a measuring system (30) measuring a roll angle and a pitch angle of said aircraft (1), said filter (20) cooperating with said measuring system (30).

# Fig.1

# Fig.2

# Fig.3

# Fig.4

## Fig.5

## Fig.6

**Fig.7**

**Fig.8**

**EP 4 009 070 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 3236213 A
- EP 3163318 A
- US 20130332062 A1
- US 20130282208 A1
- EP 2138864 A1